# EUROPEAN PATENT APPLICATION

(11) **EP 2 325 820 A1**
(43) Date of publication of application: **25.05.2011**
(21) Application number: 09176962.0
(22) Date of filing: 24.11.2009
(51) Int. Cl.: G08B 13/196, H04N 7/18

(54) **System for displaying surveillance images**

(71) Applicant: Nederlandse Organisatie voor Toegepast -Natuurwetenschappelijk Onderzoek TNO, 2628 VK Delft (NL)
(72) Inventor: Kooi, Frank Leonard, 3994 XE Houten (NL)
(74) Representative: Hatzmann, Martin

(57) **Abstract**

System for displaying video images from surveillance cameras, comprising one or more first video screens (1) on which, in operation, images (A...I) are displayed originating from the surveillance cameras, as well as one or more second video screens (2) on which, in operation, the map of an area, for example a city or village, is displayed, including the locations (3) of the relevant surveillance cameras in that area. The system is arranged such that, in operation, also images (A'...I') originating from the surveillance cameras are displayed via said one or more second video screens (2), which are visually linked (4) to the locations (3) of the relevant surveillance cameras. The images (A'...I') displayed via said one or more second video screens (2) have small sizes compared to the corresponding images (A...I) displayed larger via said one or more video screens (1). The locations (3) displayed via said one or more second video screens of the relevant surveillance cameras and/or the images (A'...I') displayed thereon in small sizes and the corresponding images (A...I) displayed larger via said one or more first video screens (1) are provided with corresponding color markings (a...i).

## Description

The present invention relates to a system for displaying video images from surveillance cameras, comprising one or more first video screens on which, in operation, images are displayed originating from the surveillance cameras, as well as one or more second video screens on which, in operation, the map of an area, for example a city or village, is displayed, including the locations of the relevant surveillance cameras in that area.

Such a system is for example known from the earlier patent application EP09165782.5 of the applicant. Therein the attention of surveillance personnel is attracted by means of sound originating from microphones installed at different locations of a (for example urban) area and which - at exceeding of a sound threshold (caused by shouting, calls for help etc.)- are represented via a map. After the attention of the surveillance personnel has been attracted in that way, video images originating from surveillance cameras present in the vicinity of the microphones, can be displayed via one or more video screens.

In the prior-art system the images originating from surveillance cameras are not displayed via (a representation of) the map of the area concerned; only via a "video wall", formed by one or more (first) video screens.

In addition to the system according to said earlier patent application of the applicant or separate thereof, for example as an alternative, it is proposed here to display video representations from the locations to be surveyed via -or embedded in- a representation of the map of the area to be surveyed by the surveillance cameras. Such representations should preferably be rather small so as not to disturb the map information. An important advantage is that with the proposed method a much better view can be obtained over the complete area to be surveyed. The method described in the earlier patent application may, optionally (however not necessary), be applied in the system proposed here.

According to the current invention the system is preferably arranged such that, in operation, via said one or more second video screens -via which the map of an area are displayed, including the locations of the surveillance cameras in that area- also the images originating from those surveillance cameras can be displayed, which, as to their representation at said one or more second video screens (with the map), are visually linked to the locations of the relevant surveillance cameras.

As already mentioned, the images displayed via said one or more second video screens preferably may have smaller sizes compared with the corresponding images displayed via said one or more first video screens (the "video wall").

As to the visual linkage between the (small) video images on the map and the location of the relevant surveillance cameras, it is preferably provided that the locations displayed via said one or more second video screens (the map) of the video cameras and/or the small sized images displayed thereon and the corresponding larger images displayed are provided with corresponding color markings (color marks). If a surveillance person watches on the (overview) map screen including the (small) video images (according to the invention), something in one of those small images that he/she would like to see in more detail, he/she may notice the marking color of the location of the relevant surveillance camera and/or small sized image on the map screen and search for the corresponding (larger) video screen of the "video wall" having the same color marking (for example a colored rim around the image screen), displaying about the same image, originating from the same surveillance camera, however larger sized, so that the situation can be watched more in detail.

### Hereinafter the invention will be discussed more in detail with reference to a figure.

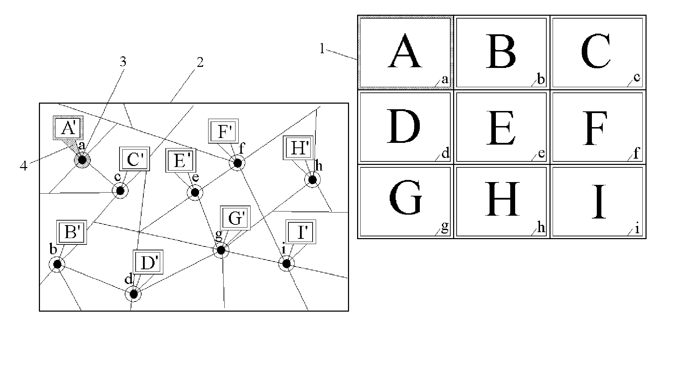

The figure shows an exemplary embodiment of a system according to the invention, arranged for displaying video images from surveillance cameras, comprising a number of first video screens 1 on which, in operation, images A...I are displayed originating from the surveillance cameras (not shown) placed at different locations in a specific area. By means of a (second) video screen 2 (which may be formed by a cooperating set of video screens) on which, in operation, the map of an area, for example a city or village, is displayed, including the locations of the relevant surveillance cameras in that area. The system is arranged such that, in operation, not only the images A...I originating from the surveillance cameras are displayed via the "video wall" 1, but also -or instead-images A'...I', also originating from the surveillance cameras, via the video screen 2, which images A'...I' are visually linked (4) to the locations a...i of the relevant surveillance cameras. The images A'...I' displayed via video screen 2 have smaller sizes than the corresponding larger images A...I displayed via the video screens 1, but do mainly include the same image information. The locations 3 of the relevant surveillance cameras displayed via the video screen 2 and/or the images A'...I' displayed small sized, as well as the corresponding images A...I displayed via the video screens 1 are provided with corresponding color markings -as, according to the Rules, no use may be made of colors in the figure- indicated with a...i. Those color markings can be arranged both around the

(larger) images A...I and around the (smaller) images A'...I' in the form of colored frames, where for example a is red, b green, c yellow etc. Additionally or instead of that the representations 3 of the different camera locations in video screen 2 may be provided with such color markings, for example with colored frames around the representations 3 of the camera locations. The linking elements 4 between the camera locations 3 and the corresponding (small) images A'...I' may be provided with the different colors a...i.

In this way it is achieved that when a surveillance person watches, on the (overview) map displayed on the video screen 2 and including the small video images A'...I', something in one of those smaller images A'...I' which he/she wants to see more in detail, he/she notices the marking color a...i of the relevant location of the surveillance camera 3 and/or the small image of the map screen 2 and search for the (larger) video image A...I within the "video wall" 1 marked with the same color a...i (for example by a colored rim around the image screen) originating from the same surveillance camera and displaying (approximately) the same image, however larger, so that the situation can be watched more precisely.

## Claims

1. System for displaying video images from surveillance cameras, comprising one or more first video screens (1) on which, in operation, images (A...I) are displayed originating from the surveillance cameras, as well as one or more second video screens (2) on which, in operation, the map of an area, for example a city or village, is displayed, including the locations (3) of the relevant surveillance cameras in that area, the system being arranged that, in operation, images (A'...I') originating from said surveillance cameras can be displayed via said one or more second video screens (2), which are visually linked (4) to the locations (3) of the relevant surveillance cameras.

2. System according to conclusion 1, the images (A'...I') displayed via said one or more second video screens (2) having small sizes compared to the corresponding larger images (A...I) displayed via said one or more first video screens (1).

3. System according to conclusion 2, the locations (3) of the surveillance cameras displayed via said one or more second video screens (2) and/or the images (A'...I') displayed thereon in a small size and the corresponding larger images (A...I) displayed via said one or more first video screens being provided with corresponding color markings (a...i).
